# EUROPEAN PATENT APPLICATION

(11) **EP 3 457 094 A1**
(43) Date of publication of application: **20.03.2019**
(21) Application number: 17191623.2
(22) Date of filing: 18.09.2017
(51) Int. Cl.: G01F 11/08, G01F 11/00

(54) **A DEVICE FOR DOSING AND DISPENSING MATERIAL AND A METHOD OF OPERATING SUCH DEVICE**

(71) Applicant: Balda Medical GmbH & Co. KG, 32549 Bad Oeynhausen (DE)
(72) Inventor: FELSNER, Christian, 32545 Bad Oeynhausen (DE); DITTMER, Thorsten, 32584 Löhne (DE)
(74) Representative: Patentanwälte Bressel und Partner mbB

(57) **Abstract**

A device for dosing and dispensing material, wherein the device (1) comprises a material receiving means (8) with an inlet section and an outlet section, a means for opening and closing the inlet section and a means for opening and closing the outlet section, wherein at least a portion of the material receiving means (8) is made of an elastic material, wherein the means for opening and closing the inlet and the outlet section are each provided by a pinch valve arrangement for pinching off the inlet and outlet section, and a method for operating such a device (1).

## Description

The invention relates to a device for dosing and dispensing material, in particular granular material. Further, the invention relates to a method of operating such a device.

In particular in the technical field of drug administration, it is desirable to provide a reliable and accurate dosing and dispensing of drugs, especially of drugs in a granular form. Such an accurate and reliable dosing and dispensing is especially desirable in the field of pediatric drug administration.

It is further desirable to minimize the risk of material contamination or damaging during the dosing and dispensing procedure, e.g. due to shearing. It is further desirable to provide an accurate adjustment of the dosing and dispensing volume. Further, a corresponding device should be easy-to-handle and should be inexpensive to manufacture.

The document DE 20 2013 002 878 U1 discloses a device for dosing a powder, wherein a powder can be precisely measured and dispensed in a dosed manner. The device however, has the disadvantage that moveable parts of the device directly contact the powder which increases the risk of aberration and risk of an undesired contamination and damaging of the powder. Further, the device taught by DE 20 2013 002 878 U1 features an open connection between a powder reservoir and a dosage volume in a basic, non-actuated state. This means that the dosage volume before the first actuation of the device cannot be adjusted reliably.

The document DE 299 07 879 U1 discloses a dispensing device for food in powder form. Corresponding to the teaching of DE 20 2013 002 878 U1, moveable elements for dosing and dispensing the food are in direct contact with the food to be dispensed which increases the risk of contamination and damaging.

The document CA 2,910,814 A1 discloses an apparatus and method for dispensing a granular material. The apparatus includes a hopper for storing the granular material and a feeder for delivering the granular material through a hopper outlet to dispensing tube that is configured to guide the granular material towards a dispensing outlet. A valve assembly is actuable to pinch and unpinch the dispensing tube, thereby blocking and unblocking the passage of material.

There is the technical problem of providing a device for dosing and dispensing material and a method of operating such a device which allows a precise, reliable dosing and dispensing of material while a risk of contamination and damaging of the material is reduced.

The solution is provided by the subject-matter with the features of claim 1 and 14. Further advantages embodiments of the invention are provided by the subject-matter with the features of the sub claims.

A device for dosing and dispensing material is proposed. The device is in particular suitable for dosing and dispensing granular material, in particular free-flowing granular material. For example, the device can be used to deliver solid multi particulate medicines to patients. The material can e.g. be a drug in powder form, in particular a pediatric drug. The invention, however, is not restricted to drugs as a material. Thus, the device also allows the dosing and dispensing of other materials such as liquids materials or food.

The device allows a volumetric dosing and dispensing of material. The device can be operated manually, in particular by a user. In other words, a manual operation of the device allows dosing and dispensing of material.

The device comprises a material receiving means for receiving the material which is intended to be dosed and dispensed. The material receiving means allows receiving a predetermined dose of material to be dispensed. The material receiving means can also be referred to as dosing container. The material of the material receiving means can be chosen such that a desired compatibility with the material to be dispensed is provided.

The material receiving means has an inlet section and an outlet section. By means of the inlet section, in particular through the inlet section, material can be filled or introduced into a material receiving volume of the material receiving means. In other words, the inlet section can allow the passage of material into the material receiving volume. By means of the outlet section, in particular through the outlet section, material can be transported out of the material receiving means. In particular material can trickle of the material receiving volume through the outlet section. In other words, the outlet section can allow the passage of material out of the material receiving volume.

Further, the device comprises a means for opening and closing the inlet section. In an opened state of the inlet section, material can be filled into the receiving volume of the material receiving means. In a closed state of the inlet section, no material can be filled into the said receiving volume through the inlet section. Further, the device comprises a means for opening and closing the outlet section. In an opened state of the outlet section, material can be transported from the said receiving volume out of said receiving volume. In a closed state of the outlet section, no material can be transported out of the receiving volume through the outlet section. In other words, the passage of material through the inlet or outlet section is blocked in a closed state and unblocked in an opened state. Transportation of material into the receiving volume and out of the receiving volume can be at least partially effected by a weight force on the material.

Further, the device can comprise a main body, in particular a main casing. At least a part of the material receiving means, in particular the part providing the material receiving volume, can be arranged within said main body. The material receiving means and the main body can be designed as separate elements. It is, for instance, possible that the material receiving means is releasably fastened to the main body. In this case, the main body can have receiving means for receiving the material receiving means. It is also possible that the main body provides the material receiving means, in particular in an integral manner.

If the material receiving means and the main body are designed as separate elements it is possible that the material receiving means is an exchangeable element. In this case, the material receiving means can e.g. be exchanged after a predetermined number of dosing and dispensing operations. It is also possible that the material receiving means is a disposable article. This advantageously reduces a risk of contamination of the material to be disposed.

According to the invention, at least a portion of the material receiving means is made of an elastic material. Preferably, the total material receiving means is made of an elastic material. It is, however, also possible that only the portions or sections of the material receiving means which interact with the means for opening and closing the inlet section and with the means for opening and closing the outlet section are provided by the elastic material. Preferably, the elastic portion of the material receiving means is deformable reversibly. This can mean that the material receiving means can return to an undeformed state after a deformation is terminated.

Further, the means for opening and closing the inlet section and the means for opening and closing the outlet section are each provided by a pinch valve arrangement for pinching off the respective section. In other words, the inlet section can be put into a closed state by pinching off the inlet section and put into an opened state by releasing the pinched state. Correspondingly, the outlet section can be put into a closed state by pinching off the outlet section by operating the corresponding pinch valve arrangement. The outlet section can be put into an opened state by releasing the pinched state by operating the corresponding pinch valve arrangement.

Preferably, the pinch valve arrangements are designed and/or arranged such that no (direct) mechanical contact between the material to be dosed and to be dispensed, in particular of the material passing through the inlet section into the material receiving volume or through the outlet section out of the material receiving, and the pinch valve arrangement, e.g. parts of the pinch valve arrangement which interact with the material receiving means, is made during the operation of the pinch valve arrangements, i.e. during pinching off and release of the pinched state. In other words, the inlet section and the outlet section can be pinched off from the exterior. It is, for instance, possible to pinch off the inlet and/or outlet section by pressing opposing inner wall sections of the material receiving means against each other, wherein the pinch valve arrangements interact with outer wall sections of the material receiving means.

As no mechanical contact between the interacting parts of the pinch valve arrangements and the material to be dosed and dispensed is established during the dosing and dispensing operation, the risk of a contamination and mechanical damage, e.g. shearing, of the material is reduced.

In general terms, a pinch valve arrangement can therefore denote an arrangement of means and/or elements by which the inlet or outlet section can be put into the closed state, in particular by which opposing inner wall sections of the material receiving means can be pressed against each other and/or by which a radius of the opening of the inlet or outlet section of the material receiving means can be reduced to zero. Therefore, pinching off can also be achieved by squeezing, press shutting or tying up the material receiving means or a section thereof.

It is possible that the pinch valve arrangement comprises a pinch element. The pinch element can denote an element which interacts with the material receiving means, in particular with an exterior wall section of the material receiving means in order pinch off the material receiving, e.g. to press two opposing inner wall sections of the material receiving means against each other. The pinch element can e.g. exert a force on the exterior wall sections.

It is further possible that pinching off is achieved by performing a relative movement between the pinch valve arrangement, in particular said pinch element, and the material receiving means. In a first alternative, the material receiving means can be arranged fixed, wherein the pinch valve arrangement comprises a movable part, in particular a movable pinch element. In a second alternative, the material receiving means can be movable, wherein the pinch valve arrangement, in particular a pinch element, is fixed. In a third embodiment, the material receiving means as well as the pinch valve arrangement, in particular the pinch element, can be movable. The relative movement can be a movement which is oriented parallel to a central axis of the material receiving means. Alternatively, the relative movement can be oriented orthogonal to said central axis.
The relative movement can be a movement along a linear trajectory, a rotational movement or a movement along a curved trajectory or any combination thereof. Further, the device, in particular the pinch valve arrangement, can comprise or provide guiding means for guiding the movement of the at least one movable element.

The pinch valve arrangement, in particular the pinch element, can have or can provide a pinch surface or clamp surface. A mechanical contact between the pinch valve arrangement and the material receiving means can be made via said pinch surface. A normal vector of said surface or at least a section thereof can be oriented perpendicular to the central axis of the material receiving means. The pinch surface can be a smooth surface, in particular a surface without edges. This reduces the risk of mechanically damaging the material receiving means.

In addition to the pinch surface, the pinch valve arrangement, in particular the pinch element, can have or can provide at least one surface section which are arranged adjacent to said pinch surface. These surface section(s) can also be referred to as side surface section(s). Further, a transitional surface of the pinch surface to (a) side surface(s) of the element providing the pinch surface can be a curved surface, in particular with a desired radius of curvature. An angle between a normal vector of such a side surface section and the central axis of the material receiving means can be in the range of 0° (inclusive) to 50° (inclusive), preferably to 40° (inclusive), more preferably to 30° (inclusive). In this case, an angle between the central axis of the material receiving means and a plane comprising the side surface or a section thereof can be in the range between 40° (exclusive) to 90° (exclusive), preferably between 50° (exclusive) to 90° (exclusive), more preferably between 60° (exclusive) to 90° (exclusive). A width of the pinch surface can be in the range of 0.2 mm to 1.0 mm.

The elastic material of the material receiving means can have a predetermined geometric design and/or predetermined geometric dimensions and/or predetermined material characteristics. The geometric design and/or the geometric dimensions and/or the material characteristics should be chosen such that a force required for pinching off the material receiving means is minimized and such that a desired reversibility of deformation of the material receiving means is provided. Further desired is to minimize an adhesion of material to the material receiving means. It is e.g. possible to provide the elastic material as an anti-static material and/or as a material with a low surface friction with respect to the material to be dispensed. The material of the material receiving means can e.g. be an elastomer, in particular a thermoplastic elastomer or a crosslinked elastomer, more particular a silicone.

The elastic material can have a predetermined hardness, in particular a shore hardness in the range of A40 to A100, preferably in the range of A50 to A90. Further, the material receiving means can have a wall thickness in the range of 0.5 mm to 2.0 mm, preferably in the range of 0.5 mm to 1.0 mm. However, it is also possible to choose thicknesses smaller than 0.5mm, in particular as a thickness of a film-like material.

Preferably, the means for opening and closing are designed and/or arranged and/or can be operated such that the outlet section is in a closed state if the inlet section is in an opened state and/or such that the inlet section is in a closed state if the outlet section is in an opened state and/or such the outlet section is closed before or during the inlet section is opened and/or such that the inlet section closed before or during the outlet section is opened.

It is in particular possible that in a basic state of the proposed device, the inlet section is in a closed state and the outlet section is in an opened state. The basic state can be a state in which the device is not operated, e.g. by a user. In particular, the basic state can be different from an operated state. The basic state can also be referred to as dispensing state. The operated state can also be referred to as dosing state.

In the operated state, the inlet section can be in an opened state, wherein the outlet section is in a closed state. By operating the device, the state of the device can be changed from the basic state to the operated state. A closed state of the inlet section in the basic state advantageously provide the possibility of adjusting the material receiving volume of the material receiving means, in particular for adjusting the dose to be dispensed, before material is filled into the material receiving means, in particular before a first operation of the proposed device.

In another embodiment, a material receiving volume provided by the material receiving means is adjustable. The material receiving volume can e.g. denote or comprise the volume of the material receiving means provided between the inlet section and the outlet section, in particular between the inlet section and the outlet section in a closed state, respectively. Adjustment of the material receiving volume can e.g. be performed by manual operation, e.g. by a user. Adjustment can e.g. be performed while the inlet section is in a closed state. This advantageously allows to adjust a dose of the material to be dispensed and thus enlarges an area of application of the device.

In another embodiment, the device comprises at least one actuating means for adjusting the receiving volume which can also be referred to as dosage means. The at least one actuating means for adjusting the receiving volume can e.g. be provided by an actuating means for adjusting the spatial position and/or the spatial orientation of the means for opening and closing the inlet section and/or by means for adjusting a spatial position and/or a spatial orientation of the means for opening and closing the outlet section. It is however possible that the at least one actuating means for adjusting the receiving volume is designed in another way.

It is in particular possible that the at least one actuating means for adjusting the receiving volume comprises or is designed as a sliding element or slider, wherein the sliding motion of the sliding element changes the aforementioned spatial position and/or spatial orientation. The sliding element can e.g. be moveably mounted to at least one actuating element for actuating the means for opening and closing the inlet section and/or outlet section or moveably mounted to the at least one main body. This advantageously further improves the handling of the proposed device.

In a further embodiment, a spatial position and/or a spatial orientation of the means for opening and closing the inlet section is/are adjustable. The spatial position and/or orientation can be a position and/or orientation relative to a coordinate system of the material receiving means or relative to a coordinate system of the main body, i.e. relative to a coordinate system fixed in position and orientation relative to the material receiving means or main body.

In addition or, preferably, alternatively, a spatial position and/or a spatial orientation of the means for opening and closing the outlet section are adjustable. Preferably, the spatial position and/or a spatial orientation of the means for opening and closing the inlet section is/are fixed while the spatial position and/or the spatial orientation of the means for opening and closing the outlet section is/are adjustable.

It is, for instance, possible to change a spatial position of the means for opening and closing relative to the material receiving means along a central longitudinal axis of the material receiving means. In other words, a position and/or orientation of the inlet section and/or of the outlet section with respect to the material receiving means can be changed. This can e.g. mean that a section of the material receiving means which provides the inlet and/or the outlet section can change during the adjustment of the spatial position and/or spatial orientation of the means for opening and closing. In particular, the material receiving volume of the material receiving means can be adjusted by adjusting the spatial position and/or the spatial orientation of the means for opening and closing the inlet section and/or the spatial and/or spatial orientation of the means for opening and closing the outlet section.

This advantageously allows a simple adjustment of the dose to be dispensed while the outlined mechanical contact between moving parts of the device and the material are also prevented during the dose adjustment operation.

In a preferred embodiment, the material receiving means is provided by a tube. In this case, at least a portion of the inner volume of the tube can provide the aforementioned material receiving volume of the material receiving means. Further, an inlet section can be arranged at a first end of the tube and an outlet section can be arranged at an opposite end of the tube. The tube can be made of elastic material. Providing the material receiving means as a tube allows a simple and inexpensive manufacturing of the material receiving means while a reliable pinching off of the tube, in particular of end sections of the tube, is possible.

In another embodiment, the device comprises a least one actuating element for actuating the means for opening and closing the inlet section. Alternatively or, preferably, in addition, the at least one actuating element is an element for actuating the means for opening and closing the outlet section. In this case, the means for opening and closing the inlet and outlet section can be operated simultaneously by actuating the actuating element. It is, however, also possible that the device comprises a first actuating element for actuating the means for opening and closing the inlet section and a second actuating element for actuating the means for opening and closing the outlet section, wherein the actuating elements are designed as separate elements. The at least one actuating element can be designed and/or arranged such that a manual operation, e.g. a pushing operation or pulling operation, of the actuating element, e.g. by a user, is possible.

It is possible that the at least one actuating element can take an actuated state and a non-actuated state. In the non-actuated state, the device can be in the basic state. In the actuated state, the device can be in the operated state. By actuating the at least one actuating means, the state of the device can be changed from the basic state to the operated state. It is further possible to change the state of the device from the operated state to the basic state by also actuating the at least one actuating element, e.g. manually or by means of a return element.

Preferably, the at least one actuating element has or provides or is attached to at least a part of the means for opening and closing the inlet section, in particular to a pinch and release section of the means for opening and closing the inlet section. Alternatively or in addition, the at least one actuating element has or provides or is attached to at least one part of the means for opening and closing the outlet section, in particular to a pinch and release section of the means for opening and closing the outlet section.

In particular, the means for opening and closing the inlet section, e.g. the pinch and release section thereof, can comprise a plate element. Further, the plate element can comprise a slot section and a through-hole section, wherein the slot section comprises a slot in the plate element and the through-hole section comprises a through-hole of the the plate element. The slot and the through-hole are both designed for receiving a section of the material receiving means. In particular, the material receiving means can extend through the slot or the through-hole. Geometric dimensions, e.g. a width, of the slot can be chosen such that the material receiving means is pinched off if it extends through the slot. Geometric dimensions, e.g. a width, of the through-hole can be chosen such that the material receiving means is not pinched off if it extends through the through-hole.

It is, however, also possible that a width of the plate element varies along a length of the plate element. In this case, the plate element can interact with an inner wall of the main body in order to pinch off the material receiving means which can e.g. be arranged between said inner wall and the plate element.

Further, the actuating element can have or provide at least an operating section for a manual operation of the actuating element.

Providing at least one actuating element for actuating the means for opening and closing advantageously allows to operate the dosing and dispensing device in a desired manner.

In another embodiment, the at least one actuating element for actuating the means for opening and closing the inlet section and/or the outlet section is moveably mounted to the main body. The main body can have or can provide a receiving section for receiving at least a portion of the at least one actuating element. In this case, the at least one actuating element can be moved into the receiving portion or out of the receiving portion during operation of the at least one actuating element.

Further, the main body can have or can provide guiding means for the movement of the at least one actuating element. The movement of the at least one actuating element within the main body can preferably be a linear movement. It is for instance possible that the main body can have or can provide guiding grooves for receiving at least a portion of the at least one actuating element, in particular the aforementioned pinch and release section of the at least one actuating element. Further, the main body can have or can provide stop element for stopping the movement of the at least one actuating element. A stop element can e.g. be provided by an inner wall of the main body. This advantageously allows a reliable operation of the proposed device.

In another embodiment, a means for adjusting a spatial position and/or a spatial orientation of the means for opening and closing the inlet section is moveably mounted to the actuating element for actuating the means for opening or closing the inlet section and/or the outlet section, in particular to the aforementioned operating section. In addition or, preferably, alternatively, a means for adjusting a spatial position and/or a spatial orientation of the means for opening and closing the outlet section is moveably mounted to the actuating element, in particular to the aforementioned operating section. The means for adjusting the spatial position and/or spatial orientation can be referred to as movable means. The at least one actuating element, in particular the operating section can have or can provide guiding means for guiding a movement of the movable means. The movement can e.g. be a linear movement. The movable means can e.g. be designed as or comprise a slider.

Further, the at least one actuating element can have or can provide snap or latch connection elements for establishing a snap or latch connection with the movable means in a selected spatial position and/or spatial orientation of the movable means.

The movable means and thus the means for opening and closing can e.g. be arranged in a selected spatial position and/or a spatial orientation of a set of multiple predefined spatial positions and/or spatial orientations, wherein a snap or latch connection between the movable means and the actuating element can be established in each of the predefined spatial positions and/or spatial orientations. In a spatial position and/or spatial orientation which does not correspond to one of the multiple predefined spatial positions and/or spatial orientations, no snap or latch connection can be established. The snap or latch connection elements of the at least one actuating element can provide a reliable positioning of the movable means in a desired spatial position and/or a desired spatial orientation.

It is possible that each spatial position and/or spatial orientation of the movable means and thus the means for opening and closing is assigned to a specific dose. It is further possible that the at least one actuating element has or provides indicating element, e.g. numerals, for indicating the dose which is assigned to the respective spatial position and/or spatial orientation.

This advantageously allows an easy handling and operation of the proposed device as both, dosing and dispensing as well as the adjustment of the desired dose can be performed by operating the at least one actuating element.

In another embodiment, the device comprises a return element for the at least one actuating element for actuating the means for opening or closing the inlet section and/or the outlet section. The return element can e.g. be provided by a spring element. The spring element can e.g. be attached to the main body and to the at least one actuating element. The return element can e.g. be designed and/or arranged such that the at least one actuating element is returned to the non-actuated state if no manual operation of the device is performed by a user. In particular, the at least one actuating element can be pressed into the receiving portion in the actuated state. In the actuated state, the spring element can take a tensioned state. This advantageously improves the handling of the proposed device.

In another embodiment, the device comprises at least one adapter section for mounting a material container to the device. The at least one adapter section can comprise adapting means, for instance a threaded section, for mounting the material container to the device. The at least one adapter section can be provided by the main body, in particular in an integral manner. It is however also possible that the at least one adapter section is provided by an adapter body, wherein the adapter body is mounted to the main body.

Further, the at least one adapter section for mounting the material container can be designed and/or arranged such that material from the container which is mounted to the adapter section can be fed to the material receiving means, wherein the material receiving means can be arranged in, at or on the main body.

This advantageously allows to mount a material container with an undosed amount of material to the device, wherein the dosing and dispensing is performed by operating the proposed device.

Further described is an embodiment, the main body and/or the at least one actuating element and/or the material receiving means is made of plastic. The device or at least one of the parts can e.g. be made as an injection-molded part. This advantageously allows a simple and inexpensive manufacturing of the proposed device.

In another embodiment, the device comprises at least one compressing means for compressing material which is arranged in the material receiving volume of the material receiving means. By means of the compressing means it is possible to compress the material in the material receiving volume, in particular in an opened state of the inlet section. A compressing means can e.g. be designed as a shaker means for shaking at least the section of the material receiving means which comprises the material receiving volume or for causing said section to vibrate. It is, of course, possible to provide an alternative compressing means. This advantageously allows to improve the precision of the dosing operation.

In another embodiment, the pinch valve arrangement comprises a pinching pulley. The pinching pulley can provide the aforementioned pinching element. The pinching pulley can be a movable element. The pinching pulley can be mounted rotatable. Further, the pinching pulley can be movable along a linear or curved trajectory, in particular along a trajectory which is oriented at least partially parallel and/or at least partially orthogonal to a central axis of the material receiving means. The pinching pulley can have the aforementioned pinch surface and one or more side surface section(s).

Alternatively, the pinch valve arrangement comprises a pinching jaw. The pinching jaw can provide the aforementioned pinching element. The pinching jaw can be a movable element. The pinching jaw can be movable along a linear or curved trajectory, in particular along a trajectory which is oriented at least partially orthogonal to a central axis of the material receiving means. The pinching jaw can have the aforementioned pinch surface and one or more side surface section(s). It is e.g. possible that the pinching jaw is provided by the aforementioned plate element with the slot section and the through-hole section. In this case, the slot section can have or provide the pinch surface and, if applicable, one or more side surface section(s). A normal vector of the pinch surface can e.g. be oriented orthogonal to a normal vector of an upper or bottom surface of the plate element. A side surface section can be a transitional surface between the pinch surface and the upper or bottom surface.

Alternatively, the pinch valve arrangement comprises a combination of a pinching pulley and a pinching jaw. It is e.g. possible that one or, preferably more than one, pinching pulley is/are mounted rotatable to the pinching jaw. If the pinching jaw is provided by the aforementioned plate element, the at least one pinching pulley can be mounted rotatable to the plate element such that the pinching pulley extends at least partially into the slot section. Preferably, the pinch valve arrangement comprises at least one pair of pinching pulleys which are arranged at opposing sides of the slot section. This advantageously provides alternative embodiments for reliably pinching of the material receiving means.

Alternatively, the pinch valve arrangement comprises at least one thread for tying up the material receiving means. The at least one thread can be arranged and/or designed such that it provides a sling with an adjustable diameter through which the material receiving means extends. It is e.g. possible that the sling is provided by a single thread. Alternatively, it is possible that the sling is provided by two threads which can be pulled in opposite directions. This advantageously provides alternative embodiments for reliably pinching of the material receiving means.

In another embodiment, the material receiving means is an exchangeable element. This and corresponding advantages have been explained before.

Further proposed is a method of operating a device for dosing and dispensing material according to one of the embodiments described in this disclosure. The method can thus be performed by such a device. Further, the device can be configured such that a method according to one of the embodiments disclosed in this invention can be performed by the device.

Within the method, an inlet section of the material receiving means is opened, i.e. set to an opened state, by operating the respective pinch valve arrangement. Subsequently, an outlet section of the material receiving means is opened, i.e. set to an opened state, by operating a corresponding pinch valve arrangement. The operation can e.g. be performed by actuating the aforementioned at least one actuating element for actuating the means for opening or closing the inlet section and/or the outlet section.

If the inlet section is opened, the outlet section can be closed, i.e. set to a closed state. If the outlet section is opened, the inlet section can be closed, i.e. set to the closed state.

Further, a material container can be mounted to the proposed device, e.g. by means of the at least one adapter section.

This advantageously allows in easy-to-handle operation of the proposed device, wherein a desired dose can be precisely and reliably provided and dispensed.

In another embodiment, the material receiving volume of the material receiving means, i.e. the dose volume, is adjusted before opening the inlet section. Adjusting the receiving volume can e.g. be performed by operating the at least one actuating means for adjusting the receiving volume. This and corresponding advantages have been explained before.

The proposed device and the proposed method with adjustable setting of the dosing volume advantageously allow that a multiparticulate drug contacts only two parts of the device, namely the adapter section and the material receiving means which results in a minimal use of expensive medical grade materials. As the material to be dispensed doesn't come into contact with the device mechanics, a risk of leakage is minimized. Further, a wide range of dosing volumes can be covered. The device can be compatible with almost any standard storage container. The handling is easy, robust and intuitive. The device is adaptable to different drug requirements, e.g. size of the device, dosing volume, number of dosing steps and design. High precision dosing is provided. As a closed system with respect to the material is proposed, no material loss will occur. Presetting the volume reduces chances of incorrect dosing which is optimal for pediatric drug delivery. Further, no residual volume is existent in which material resides after the dispensing has been performed.

The invention will be described with reference to the attached figures. The figures show:
- Fig. 1: a schematic perspective view on a device according to the invention,
- Fig. 2: a schematic sectional view of the device shown in Fig. 1 in a basic state,
- Fig. 3: a schematic sectional view of the device shown in Fig. 1 in an operated state,
- Fig. 4a: a schematic top view on a portion of a pinch valve arrangement,
- Fig. 4b: a schematic top view on a portion on another pinch valve arrangement,
- Fig. 5: a schematic flow diagram of a method of operating a device according to the invention,
- Fig. 6: a schematic perspective view on a pinch valve arrangement according to another embodiment,
- Fig. 7a: a schematic perspective view on a pinch valve arrangement according to another embodiment,
- Fig. 7b: a schematic top view on the pinch valve arrangement shown in Fig. 7a,
- Fig. 8: a schematic perspective view on a pinch valve arrangement according to another embodiment,
- Fig. 9a: a schematic perspective view on a pinch valve arrangement according to another embodiment and
- Fig. 9b: a schematic perspective view on a pinch valve arrangement according to another embodiment,

In the following, the same reference numerals denote the same or similar technical elements.

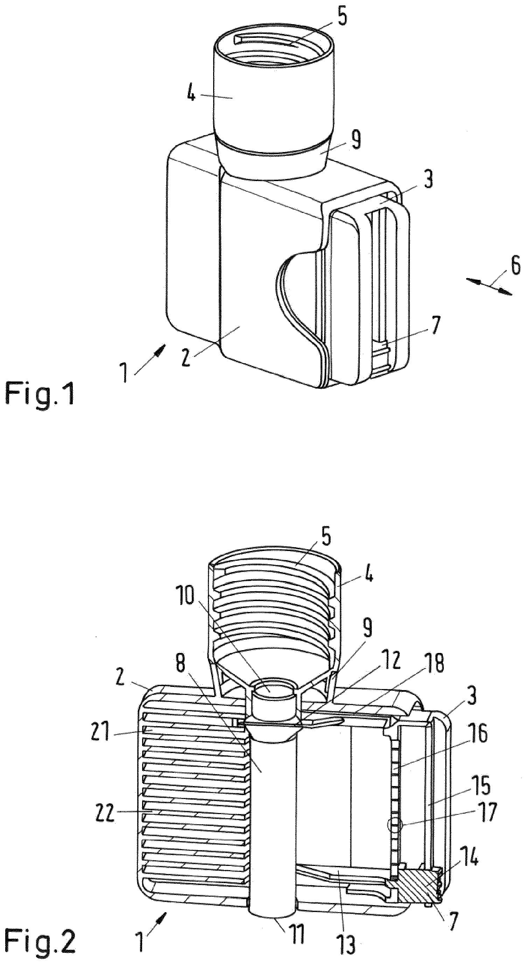

Fig. 1 shows a schematic perspective view on a device 1 for dosing and dispensing material (not shown), in particular granular material. The device comprises a main body 2. The main body 2 can e.g. be made of plastic. It is shown that the main body 2 is provided by a box, wherein wall elements of the main body enclose a receiving volume for receiving an actuating element 3 which can be also referred to as actuator button. The main body 2 is designed such that the receiving volume of the main body 2 is a stepped volume. This, however, is not a mandatory design.

The actuating element 3 is moveably mounted to the main body 2 and can be moved with a linear movement indicated by an arrow 6 relative to the main body 2. The actuating element 3 can be manually operated by a user, e.g. by pressing the actuating element 3 into the receiving volume of the main body 2. This will be explained in the following.

The device 1 comprises an adapter section 9 for mounting a material container (not shown) to the device 1. In the embodiment shown in Fig. 1, the adapter section 9 comprises an adapter element 4 which is mounted to the main body 2. It is possible to mount different adapter elements 4, in particular adapter elements providing different adapter sections for differing material containers, to the main body 2. The adapter element 4 has an internal threaded-section 5 for screwing the material container to the adapter element 4.

Further, the device comprises a dosing slider 7 which is moveably mounted to the actuating element 3. The dosing slider 7 provides an actuating means for adjusting the dose of material to be dispensed by the device 1. It is shown that the actuating element 3 has numerals indicating the volume or weight of the dose which is to be dispensed by the device 1 if the dosing slider 7 is positioned in a spatial position to which the respective numeral is assigned. The dosing slider 7 has or provides an arrow which points to the respective numeral if the dosing slider 7 is positioned in said spatial position to which the respective numeral is assigned.

The dosing slider 7 can be manually operated by a user. In particular, the dosing slider 7 can be moved in a linear manner along the actuating element 3 into different spatial positions, wherein a dose to be dispensed by the device 1 is assigned to each of said positions.

Fig. 2 shows a schematic sectional view of the device 1 shown in Fig. 1 in a basic state of the device, in particular in a non-actuated state of the actuating element 3. The basic state of the device 1 denotes a state in which the device 1 is not operated. In particular, the actuating element 3 is not actuated, e.g. pushed, by a user. Further shown is the adapter element 4 with the internal threaded-section 5. Further shown is a material receiving means 8 of the device 1 which is designed as a tube. The material receiving means 8 is made of an elastic material, in particular a reversible deformable elastic material.

A portion of the material receiving means 8 is arranged within the main body 2. In particular, the material receiving means 8 extends through the main body 2. In particular, the material receiving means 8 is arranged such that material from a material container (not shown) mounted to the adapter element 4 can be transported into a material receiving volume of the material receiving means 8. A first end 10 of the material receiving means 8 extends into the adapter section 9 of the main body. The adapter section 9 has or provides a cone-shaped section which rejuvenates towards the first end 10 of the material receiving means 8 which extends into said cone-shaped section.

At the first end 10 of the material receiving means 8, an inlet section of the material receiving means 8 is arranged. At an opposite end 11 of the material receiving means 8, an outlet section of said material receiving means 8 is arranged.

Further shown are means for opening and closing the inlet section and means for opening and closing the outlet section of the material receiving means 8. These means are respectively provided by a pinch valve arrangement for pinching off the respective section.

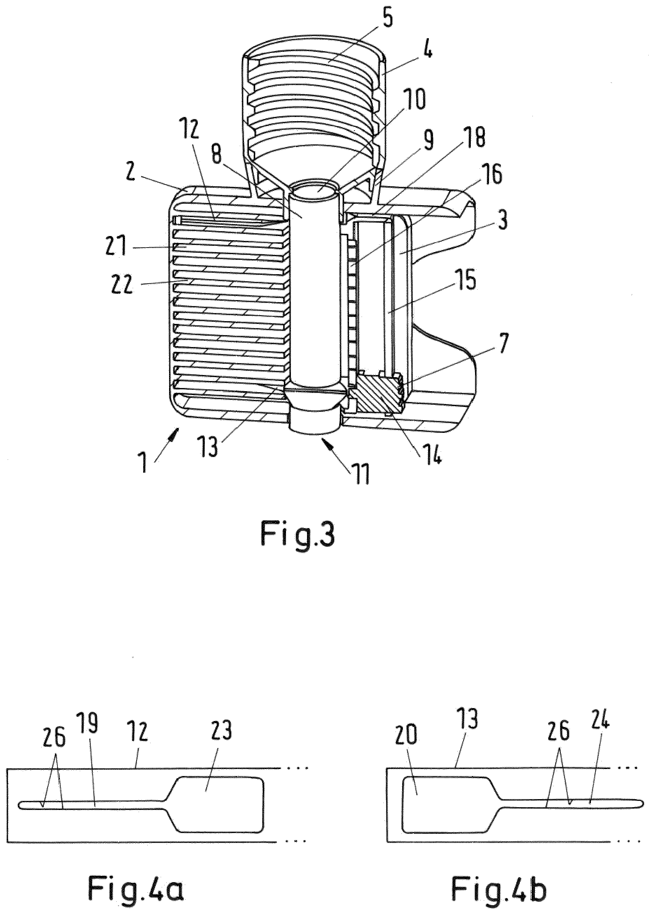

A first pinch valve arrangement for pinching off the inlet section comprises a first plate element 12 (see also Fig. 4a), wherein the first plate element 12 is attached to the actuating element 3. In particular, the first plate element 12 extends from the actuating element 3 into the receiving volume of the main body 2.

A second pinch valve arrangement for pinching off the outlet section of the material receiving means 8 comprises a second plate element 13 (see also Fig. 4b) which is attached to the dosing slider 7. The dosing slider 7 comprises an actuating section 14 which can be manually operated, e.g. by a user. The actuating section can have or provide a guiding slot in which a guiding bar 15 of the actuating element 3 extends. The guiding bar 15 and the said guiding slot provide a linear bearing.

Further shown is a second guiding bar 16 of the actuating element 3 which provides a set of multiple indentations 17, wherein only one indentation 17 is referenced for the sake of clarity. The actuating section 14 of the dosing slider 7 provides a corresponding nose element which can extend into one of the indentations 17. The nose element and one of the indentations 17 can provide a snap-lock connection between the dosing slider 7 and the actuating element 3. Of course, the indentations 17 and the nose element are designed such that the nose element can be removed from an indentation 17 by manually operating the dosing slider 7.

From Fig. 2, it is clear that a spatial position of the second plate element 13 and thus of the means for opening and closing the outlet section of the material receiving means 8 can be changed if the dosing slider 7 is moved relative to the actuating element 3 and relative to the main body 2.

Further shown is a return element 18 of the device 1, wherein the actuating element 3 and the main body 2 are mechanically connected by the return element 18. The return element 18 is in particular designed as a spring element.

Further shown is that in the basic state, the material receiving means 8 is pinched off at the first end 10. In other words, the inlet section is in a closed state. In particular, a passage of material from a container mounted to the adapter element 4 or arranged within the cone-shaped portion of the adapter section 9 into the material receiving volume of the material receiving means 8 is blocked. The material receiving volume can denote the inner volume of the material receiving means 8 which is arranged between the first plate element 12 of the first pinch valve arrangement and the second plate element 13 of the second pinch valve arrangement. Further, the outlet section of the material receiving means 8 is in an opened state.

This means that the first pinch valve arrangement is in a pinched off state, wherein the second pinch valve arrangement is in a released state.

In the pinched-off state of the first pinch valve arrangement, the material receiving means 8, in particular the first end 10 of the material receiving means 8, extends through a slot section 19 of the first plate element 12, wherein dimensions, in particular a width, of said slot section 19 (see Fig. 4a) is designed such that the walls of the material receiving means 8 are pressed against each other such that the inlet section is closed.

In the released state of the second pinch valve arrangement, the material receiving means 8, in particular the second end 11 of the material receiving means 8, extends through a through-hole section 20 of the second plate element 13 (see Fig. 4b), wherein a dimension, in particular a width, of the through-hole section 20 of the second plate element 13 is chosen such that the material receiving means 8 is not deformed when extending through the through-hole section 20 and thus the outlet section is open.

Further shown is that the main body 2 has or provides guiding slots 21 for receiving and guiding the plate elements 12, 13 during a movement of the actuating element 3. A width of said guiding slots is adapted to a thickness of said plate elements 12, 13. If the actuating element 3 is pushed into the main body 2, the plate elements 12, 13 move within the guiding slots 21. The guiding slots 21 are provided by internal bars 22 within the main body 2. For the sake of clarity, only one guiding slot 21 and one internal bar 22 is referenced with a reference numeral.

In the basic state, a passage of material arranged within the material receiving volume of the material receiving means 8 through the outlet section is unblocked. Thus, a dosed volume of material can be dispensed from the material receiving means 8. Further, no additional material can be introduced into said material receiving volume.

Fig. 3 shows a schematic sectional view of the device 1 shown in Fig. 1 in an operated state of the device 1, in particular in an actuated state of the actuating element 3.

In the operated state, the material receiving means 8 is pinched off at the second end 11. In other words, the outlet section is in a closed state. Further, the inlet section is in an opened state, i.e. material receiving means 8 is not pinched off at the first end 10. This means that the first pinch valve arrangement is in a released state, wherein the second pinch valve arrangement is in a pinched off state.

In particular, a passage of material from a container mounted to the adapter element 4 or arranged within the cone-shaped portion of the adapter section 9 into the material receiving volume of the material receiving means 8 is unblocked.

In the pinched-off state of the second pinch valve arrangement, the material receiving means 8, in particular the second end 11 of the material receiving means 8, extends through a slot section 20 of the second plate element 13, wherein dimensions, in particular a width, of said slot section 20 (see Fig. 4b) is designed such that the walls of the material receiving means 8 are pressed against each other such that the outlet section is closed.

In a released state of the first pinch valve arrangement, the material receiving means 8, in particular the first end 10 of the material receiving means 8, extends through a through-hole section 23 of the first plate element 12 (see Fig. 4a), wherein a dimension, in particular a width, of the through-hole section 23 of the first plate element 12 is chosen such that the material receiving means 8 is not deformed when extending through the through-hole section 23 and thus the inlet section is open.

In the operated state, a passage of material from a material container mounted to the adapter element 4 and/or arranged in the cone-shaped section of the adapter section 9 into the material receiving volume of the material receiving means 8 through the first end and the inlet section is unblocked. However, a passage of material out of the material receiving volume through the outlet section is blocked since the outlet section of the material receiving means 8 is pinched-off.

In the operated state, the spring element 18 is tensioned and generates a force for returning the actuating element 3 into the non-actuated state shown in Fig. 2. If a user releases the actuating element 3, the actuating element 3 will be pushed out of the receiving volume of the main body 2 by means of the spring force.

In Fig. 4a and in Fig. 4b, pinching surfaces 26 of the plate elements 12, 13 are shown. A mechanical contact between the material receiving means 8 and the plate elements 12, 13 is established via said pinching surfaces 26. A normal vector of said pinching surfaces 26 is oriented perpendicular to a normal vector of the upper surface of the plate element 12, 13 and perpendicular to a central axis the material receiving means 8.

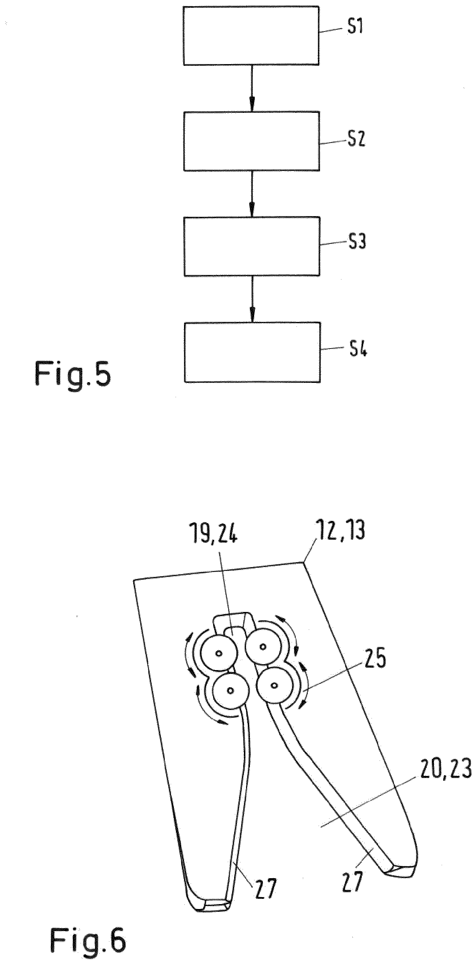

It is possible that the plate element 12, 13 has also transitional surface sections 27 (see Fig. 6) which provide a transition of the upper surface of the plate element 12, 13 to the pinching surface 26 and a transition of the bottom surface of the plate element 12, 13 to the pinching surface 12, 13. The pinching surface 26 and/or the transition surface sections can be smooth surfaces. The transition surface sections, however, can be curved surfaces. A normal vector of the transition surface can oriented with an angle between 0° and 50° relative to the normal vector of the upper surface of the plate element 12, 13.

Fig. 5 shows a schematic flow diagram of a method of operating a device 1 shown in Fig. 1. In a first step S1, a material container, in particular a standard storage container for the material, can be mounted to the device 1 by means of the adapter element 4. In the first step S1, the device 1 is in a basic state (shown in Fig. 2), wherein an inlet section of the material receiving means 8 is closed and material from the material container cannot enter a material receiving volume.

In a second step S2, a dosing volume can be adjusted by operating the dosing slider 7 (see Fig. 1), in particular by sliding the dosing slider 7 into a spatial position to which a desired dosing volume is assigned. By performing this sliding movement, the second plate element 13 is moved along the material receiving means 8 which extends through the through-hole section 20 of the second plate element 13 and thus does not prevent said sliding motion.

If the dosing slider 7 reaches the desired position, a nose element of an actuating section 14 of the dosing slider 7 (see Fig. 3) can latch into indentation 17 provided by a second guide bar of the actuating element 3 such that a snap-lock connection is provided. Said connection can be released by manual operation of the dosing slider 7.

In third step S3, an actuating element 3 can be actuated, in particular pushed into the main body 2. While executing the corresponding movement, an inlet section of the material receiving means 8 will be moved from a slot section 19 of a first plate element 12 into a through-hole section 23 of said first plate element 12, wherein an outlet section of the material receiving means 8 will move from the aforementioned through-hole section 20 of the second plate element 13 into a slot section 24 of the second plate element 13. As a consequence, the outlet section will be squeezed and thus pinched-off. Further, the inlet section of the material receiving means 8 will be opened such that material within the material container and/or the cone-shaped receiving portion of the adapter section 9 can rinse or fall into the material receiving volume of the material receiving means 8.

Thus, the receiving volume of the material receiving means 8 will be filled up with a desired amount of material, e.g. the amount corresponding to the dose which has been adjusted by adjusting the receiving volume.

In the fourth step S4, the actuating element 3 can be released. Due to a returning force generated by the spring element 18, the actuating element 3 will be pushed out of the main body 2. Due to the motion of the plate elements 12, 13, the inlet section of the material receiving means 8 will be moved from the through-hole section 23 into the slot section 19, wherein the outlet section will be moved from the slot section 24 into the through-hole section 20 of the second plate element 13. This means that the inlet section will be set to the closed state, while the outlet section will be set to the opened state.

Thus, the dosed amount of material within the material receiving volume can be dispensed through the outlet section of the material receiving means 8.

Fig. 6 shows a schematic perspective view on a pinch valve arrangement according to another embodiment. As the embodiment shown in Fig. 4a or in Fig. 4b, the pinch valve arrangement comprises a plate element 12, 13 with a slot section 19, 24 and a through-hole section 20, 23. Further indicated are pinching pulleys 25 which are mounted rotatable to the plate element 12, 13 such that the pinching pulleys 25 extend partially into the slot section 19, 24. An axis of rotation of said pinching pulleys 25 is oriented perpendicular to an upper surface of the plate element 12, 13. It is shown that the pinch valve arrangement comprises three pairs of two pinching pulleys 25, wherein the two pinching pulleys 25 of one pair are arranged at opposite side walls of the slot section 19, 24.

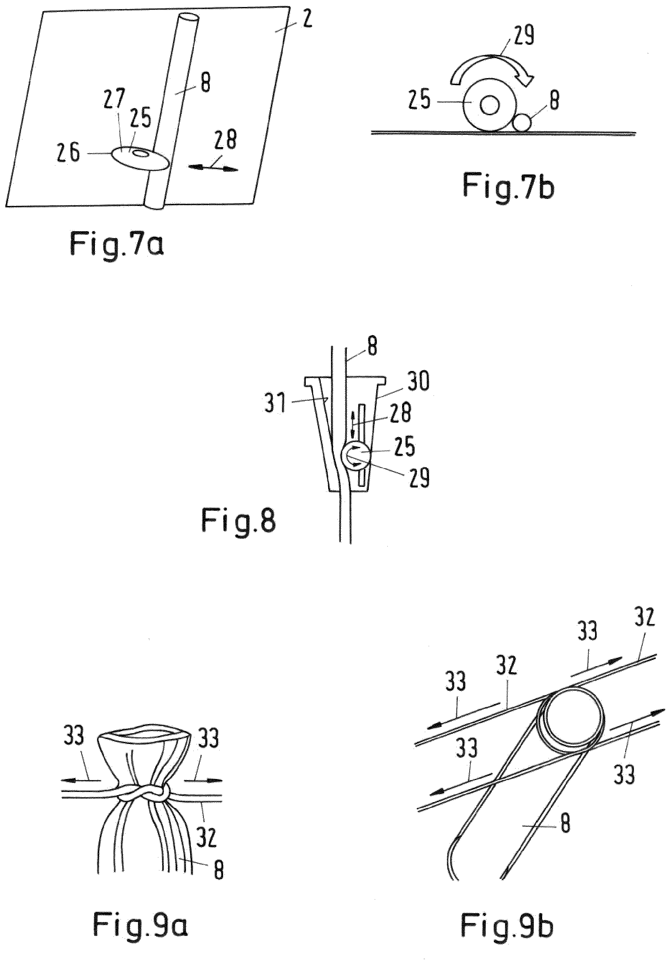

The pinching pulleys 25 can have a pinching surface 26 (see Fig. 7a) and side surfaces 27, wherein a normal vector of said pinching surface 26 is oriented perpendicular to a normal vector of the upper surface of the plate element 12, 13. A normal vector of the side surface 27 is oriented with an angle between 0° and 50° relative to the normal vector of the upper surface of the plate element 12, 13. Further shown are transition surface sections 27 which provide a side surface section of the plate element 12, 13. Thematerial receiving means 8 is pinched off if it is introduced into the gap between the pinching pulleys 26 of a pair of pinching pulleys. Providing the pinching pulleys 26 advantageously allows a smooth insertion of the material receiving means 8 into the slot section 19, 24.

Fig. 7a and Fig. 7b show a schematic perspective view and a schematic top view on a pinch valve arrangement according to another embodiment. The arrangement comprises a pinching pulley 25 which is mounted rotatable. A rotational movement is indicated by an arrow 29. An axis of rotation is oriented parallel to a central axis of the material receiving means 8. Further, the pinching pulley 25 can be moved along a linear trajectory indicated with an arrow 28. The linear trajectory 28 is oriented perpendicular to the central axis of the material receiving means 8.

The material receiving means 8 is arranged on a surface provided e.g. by the housing 2. By moving the pinching pulley 25 along the linear trajectory, the pinching pulley 25 can be rolled over the material receiving means 8 and can thus pinch off the material receiving means 8. As described before, the pinching pulley 25 can have a pinching surface 26 and a side surface 27.

Fig. 8 a schematic perspective view on a pinch valve arrangement according to another embodiment. The arrangement comprises a pinching pulley 25 which is mounted rotatable. A rotational movement is indicated by an arrow 29. An axis of rotation is oriented perpendicular to a central axis of the material receiving means 8. Further, the pinching pulley 25 can be moved along a linear trajectory indicated with an arrow 28. The linear trajectory 28 is oriented parallel to the central axis of the material receiving means 8. Further shown is a guiding means 30 for guiding the movements of the pinching pulley 25. Further shown is a slanted bearing surface 31 for the material receiving means, wherein a normal vector of said bearing surface 31 and a central axis of the material receiving means 8 enclose an angle between 0° (exclusive) and 90° (exclusive). The material receiving means 8 is arranged between the bearing surface 31 and the pinching pulley 25. The material receiving means 8 is arranged on a surface provided e.g. by the housing 2. The housing 2 can also provide the guiding means 20 and the bearing surface 31.

By moving the pinching pulley 25 along the linear trajectory, the pinching pulley 25 can be rolled along the material receiving means 8, wherein the gap between the pinching pulley 25 and the bearing surface 31 is changed during the linear movement. If the gap width is smaller than a diameter of the material receiving means 8, the material receiving means 8 is pinched off. As described before, the pinching pulley 25 can have a pinching surface 26 and a side surface 27.

Fig. 9a a schematic perspective view on a pinch valve arrangement according to another embodiment. Shown is a material receiving means 8 and a single thread 32. The single thread 32 provides a sling, wherein the material receiving means 8 extends through the sling. Further indicated are pulling directions 33 for pulling opposite ends of the single thread. If these ends are pulled according to the indicated directions 33, the diameter of the sling reduces and the material receiving means 8 is pinched off. Thus, the pinching off is achieved by tying up a thread.

Fig. 9b a schematic perspective view on a pinch valve arrangement according to another embodiment. Shown is a material receiving means 8 and two threads 32. The two threads 32 are arranged such that a sling is provided, wherein the material receiving means 8 extends through the sling. Further indicated are pulling directions 33 for pulling the threads. If these ends are pulled according to the indicated directions 33, the diameter of the sling reduces and the material receiving means 8 is pinched off. Thus, the pinching off is achieved by tying up two threads 32.

## Claims

1. A device for dosing and dispensing material, wherein the device (1) comprises a material receiving means (8) with an inlet section and an outlet section, a means for opening and closing the inlet section and a means for opening and closing the outlet section,
**characterized in that**
at least a portion of the material receiving means (8) is made of an elastic material, wherein the means for opening and closing the inlet and the outlet section are each provided by a pinch valve arrangement for pinching off the inlet and outlet section.

2. The device according to claim 1, **characterized in that** a material receiving volume of the material receiving means (8) is adjustable.

3. The device according to claim 2, **characterized in that** the device (1) comprises at least one actuating means for adjusting the receiving volume.

4. The device according to one of the preceding claims, **characterized in that** a spatial position and/or a spatial orientation of the means for opening and closing the inlet section and/or a spatial position and/or a spatial orientation of the means for opening and closing the outlet section are adjustable.

5. The device according to one of the preceding claims, **characterized in that** the material receiving means (8) is/are provided by a tube.

6. The device according to one of the preceding claims, **characterized in that** the device (1) comprises at least one actuating element (3) for actuating the means for opening and closing the inlet section and/or for actuating the means for opening and closing the outlet section.

7. The device according to claim 6, **characterized in that** the at least one actuating element (3) for actuating the means for opening and closing the inlet section and/or for actuating the means for opening and closing the outlet section is movably mounted to a main body (2).

8. The device according to claim 6 or 7, **characterized in that** means for adjusting a spatial position and/or a spatial orientation of the means for opening and closing the inlet section and/or a means for adjusting a spatial position and/or spatial orientation of the means for opening and closing the outlet section is movably mounted to an operating section of the at least one actuating element (3).

9. The device according to one of the claims 6 to 8, **characterized in that** the device (1) comprises a return element (18) for the at least one actuating element (3).

10. The device according to one of the preceding claims, **characterized in that** the device (1) comprises at least one adapter section (9) for mounting a material container to the device (1).

11. The device according to one of the preceding claims, **characterized in that** the device (1) comprises at least one compressing means for compressing material which is arranged in the material receiving volume of the material receiving means (8).

12. The device according to one of the preceding claims, **characterized in that** the pinch valve arrangement comprises a pinching pulley (25) or a pinching jaw or a combination thereof or that the pinch valve arrangement comprises at least one thread (32) for tying up the material receiving means (8).

13. The device according to one of the preceding claims, **characterized in that** the material receiving means (8) is an exchangeable element.

14. A method of operating a device (1) for dosing and dispensing material according to one of the claims 1 to 13, wherein an inlet section of the material receiving means (8) is opened by operating a pinch valve arrangement, wherein an outlet section of the material receiving means (8) is opened by operating a pinch valve arrangement.

15. The method according to claim 14, **characterized in that** the material receiving volume of the material receiving means (8) is adjusted before opening the inlet section.
